Europäisches Patentamt

European Patent Office

Office européen des brevets

(11) Veröffentlichungsnummer: **0 228 580**
A2

## (12) EUROPÄISCHE PATENTANMELDUNG

(21) Anmeldenummer: 86116593.4

(22) Anmeldetag: 28.11.86

(51) Int. Cl.⁴: **B 60 R 1/08**

(30) Priorität: 11.12.85 DE 8534819 U

(43) Veröffentlichungstag der Anmeldung:
15.07.87 Patentblatt 87/29

(84) Benannte Vertragsstaaten:
AT BE CH DE ES FR GB GR IT LI LU NL SE

(71) Anmelder: Metallwerk FRESE GmbH
Moltkestrasse 25
D-5653 Leichlingen(DE)

(72) Erfinder: Otting, Horst
Moltkestrasse 34
D-5659 Leichlingen(DE)

(74) Vertreter: Gille, Christian, Dipl.-Ing. et al,
Türk, Gille + Hrabal Patentanwälte Bruckner Strasse 20
D-4000 Düsseldorf 13(DE)

(54) Motorisch gesteuerter Kippspiegel.

(57) Ein motorisch verstellbarer Kippspiegel weist zur Aufnahme einer Spiegelscheibe ein, um eine horizontale Achse kippbar gelagertes Gehäuse, ein zur kippbaren Lagerung des Gehäuses geeignetes Schaltelement und einen zur Positionsänderung der Spiegelscheiben dienenden Antrieb auf. Dabei ist in dem Gehäuse eine mit dem Schaltelement in Eingriff stehende Feder angeordnet, das Schaltelement mit einer Zunge versehen, die mit ihrem freien Ende mit einer in dem Gehäuse horizontal verschiebbar angeordneten, zwei Arbeitsflächen aufweisenden Schrägkulisse eines Kuppelelementes mit Spiel in Eingriff steht, die länger als der Arbeitsbereich ausgebildeten Arbeitsflächen der Schrägkulisse sind parallel, gradlinig und in einem eine volle Kippbewegung des Gehäuses zulassenden Abstand zueinander angeordnet und das Kuppelelement, über einem Gehäuse angeordnetes Getriebe, mit dem im Gehäuse angeordneten Antriebsmotor verbunden.

FIG.1

EP 0 228 580 A2

Metallwerk Frese GmbH, Moltkestr. 25, 5653 Leichlingen

Motorisch gesteuerter Kippspiegel

Die Erfindung betrifft ein motorisch gesteuerten Kippspiegel mit den Merkmalen des Oberbegriffes des Schutzanspruches 1, insbesondere einen abblendbaren Innenrückblickspiegel für Kraftfahrzeuge und dergleichen.

Bei Kippspiegeln dieser Art befindet sich die Spiegelscheibe bzw. das sie aufnehmende Gehäuse in einer von zwei, den Lichtverhältnissen angepaßten und sich durch ihren Anstellwinkel unterscheidenden Positionen. Die Überführung der Spiegelscheibe bzw. des Gehäuses von einer in die andere Position und deren Fixierung geschieht mit Hilfe eines Antriebes. Dabei wird durch den Motor des Antriebes, eine zu der jeweiligen Position gehörende Endstellung angefahren, wobei es häufig zu einem Festsetzen und damit zu einem Ausfall des Motors und des Getriebes in der angefahrenen Endstellung kommt und eine anschließende Positioosänderung des Gehäuses bzw. der Spiegelscheibe nicht mehr möglich ist. Hierdurch wird der Vorteil eines automatisch bzw. motorisch gesteuerten Kippspiegels nicht nur zunichte gemacht, sondern eine erheblich höhere Gefährdung des Straßenverkehrs als bei einem manuell zu verstellenden Kippspiegel hervorgerufen, da bei einer Änderung der Lichtverhältnisse eine Anpassung der Spiegelscheibe an die veränderten Lichtverhältnisse nicht möglich ist und dies zu einer nicht zu vernachlässigenden Erhöhung des Unfallrisikos führt.

Der Erfindung liegt die Aufgabe zugrunde, einen motorisch verstellbaren Kippspiegel zu schaffen, der sich durch eine hohe Betriebssicherheit und eine einfache Konstruktion auszeichnet.

Diese Aufgabe wird bei einem Kippspiegel mit den Merkmalen des kennzeichnenden Teiles des Schutzanspruches 1 gelöst. Weitere vorteilhafte Ausgestaltungen der Erfindung sind Gegenstand der Unteransprüche.

-2-

Dadurch, daß gemäß der Erfindung in dem Gehäuse eine mit dem Schaltelement in Eingriff stehende Feder angeordnet ist, daß das Schaltelement mit ihrem freien Ende mit einer, in dem Gehäuse horizontal verschiebbar angeordneten, zwei Arbeitsflächen aufweisende Schrägkulisse eines Kuppelelementes mit Spiel in Eingriff stehende Zunge aufweist, daß die länger als der Arbeitsbereich ausgebildeten Arbeitsflächen der Schrägkulisse parallel, geradlinig und in einem eine volle Kippbewegung des Gehäuses zulassenden Abstand zu einander angeordnet sind und daß das, die Schrägkulisse aufweisende Kuppelelement über ein ebenfalls im Gehäuse angordnetes Getriebe mit dem im Gehäuse angeordneten Antriebsmotor verbunden ist, dient der Antrieb der Überwindung des Tod- bzw. Kippunktes der Feder um eine Änderung des Anstellwinkels des Gehäuses und damit der Spiegelscheibe einzuleiten. Nach der Überwindung des Todpunktes wird der weitere Bewegungsablauf bis zur endgültigen Positionierung durch die Feder vorgenommen, wodurch ein gesteuertes Anfahren einer Endstellung durch den Antriebsmotor entfällt und einem Ausfall des Kippspiegels durch Festfahren des Motors bzw. des Getriebes wirksam begegnet wird. Der Antriebsmotor und damit das Getriebe können ohne eine Begrenzung zu erfahren auslaufen und ebenso anlaufen, es kommt zu einem kontinuierlichen Bewegungsablauf ohne daß der Antrieb gegen einen Anschlag bzw. eine Endstellung zu fahren hat.

Weist das Getriebe eine mit dem Kuppelelement fest verbundene Zahnstange auf und ist auf der Welle des Antriebsmotors ein mit der Zahnstange kämmendes Stirnrad angeordnet, so stellt dies ein für die Anordnung im Gehäuse besonders geeignetes Getriebe dar, da es sich durch einen einfachen und platzsparenden Aufbau, einem hohen Wirkungsgrad und eine große Störunanfälligkeit auszeichnet.

Ist der Antriebsmotor ein Gleichstrommotor mit zwei Drehrichtungen, so ist die Zufuhr von elektrischer Energie besonders einfach und problemlos, da Automobile über ein Gleichstromnetz verfügen. Des weiteren wird eine Bewegung der Kippvorrichtung in zwei Richtungen ermöglicht.

Durch die Ausrüstung des Gehäuses mit einem zumindest zum Aus- und Umschalten geeigneten Schalter , muß dieser Vorgang nicht manuell vorgenommen werden, es kommt somit nicht zu einer unnötigen Ablenkung des Autofahres durch eine zusätzliche manuelle Tätigkeit. Des weiteren ist dadurch, daß zugleich mit dem Ausschalten des Motors auch eine Umschaltung und dadurch eine Änderung der zukünftigen Drehrichtung des Motors erfolgt, dieser bei einer erneuten Inbetriebnahme sofort und ohne Zeitverlust einsatzbereit.

Durch den erfindungsgemäßen Aufbau des motorisch verstellbaren Kippspiegels wird gewährleistet, daß dem bisherigen Problem des Festsetzens von Motor und Getriebe in den anzufahrenden Endstellungen wirksam begegnet wird, durch die Kombination von mechanisch gesteuerten Kippbewegung und motorisch gesteuerter Einleitung bzw. Auslösung des Kippvorganges ohne jedoch den konstruktiven Aufwand zu erhöhen.
Es wurde somit eine Kippspiegel geschaffen, der sich durch eine einfache Handhabung, störungsunanfällige Konstruktion und damit durch eine hohe Betriebssicherheit auszeichnet.

In der Zeichnung ist ein Ausführungsbeispiel eines motorisch gesteuerten Kippspiegels dargestellt,und zwar zeigt

Fig. 1 eine schaubildliche Vorderansicht eines Kippspiegels ohne
Spiegelscheibe und

Fig. 2 einen schematischen Schnitt nach Linie II-II aus Figur 1.

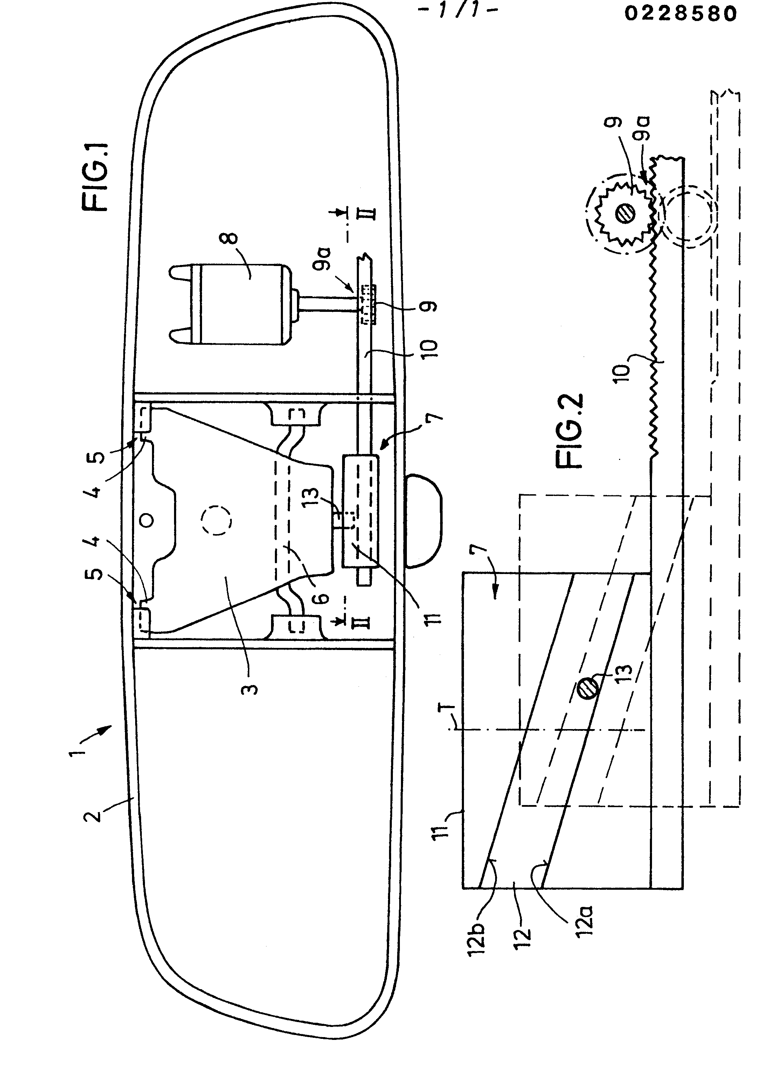

Der motorisch verstellbare Kippspiegel 1 weist wie in Figur 1 dargestellt ein, einen Keilspiegel aufnehmendes Gehäuse 2 und ein Schaltelement 3 auf. Das Schaltelement 3 ist an seiner, dem Keilspiegel abgewandten Seite,mit einer Kugelgelenkpfanne ausgestattet, mit deren Hilfe der Kippspiegel 1 verstellbar mit einem Kippspiegelhalter verbunden ist. An seinem oberen Ende weist das Schaltelement 3 zwei Fortsätze 4 auf, die mit zwei im Gehäuse 2 angeordneten Pfannen zwei Pfannenlager 5 bilden. Das Gehäuse 2, mit dem darin angeordneten Keilspiegel , der Feder 6, der Kippvorrichtung 7 und dem Antriebsmotor 8, ist mittels der Pfannenlager 5 um deren horizontale Achse, in zwei Richtungen,

-4-

in Bezug auf das Schaltelement kippbar gelagert, wobei diese Kippbewegung, durch mit dem Schaltelement 3 in Eingriff kommende, im Gehäuse 2 angeordnete , zwei paar Anschläge in beide Richtungen begrenzt wird. Das Gehäuse 2 wird durch die Formfeder 6 wahlweise mit jeweils zwei Anschlägen gegen das Schaltelement 3 gedrückt, wodurch das Gehäuse 2 und damit der Keilspiegel in einer von zwei zu wählenden Positionen zu fixieren ist. Die Überführung des Gehäuses 2 von einer dieser Positionen in die andere wird mit Hilfe der im Gehäuse 2 angeordneten Kippvorrichtung 7 und dem Antriebsmotor 8 eingeleitet. Der Antriebsmotor 8 weist ein auf seiner Welle angeordnetes, mit der Zahnstange 10 der Kippvorrichtung 7 kämmendes Stirnrad 9 auf, wobei die Zahnstange fest mit einem Kuppelelement 11 der Kippvorrichtung 7 verbunden ist und das Kuppelelement 11 eine Schrägkulisse 12 aufweist, die mit einer als Bolzen ausgebildeten Zunge 13 des Schaltelementes 3 mit Spiel in Eingriff steht. Die Zahnstange 10 und damit auch das Kuppelelement 11 sind horizontal verschiebbar im Gehäuse angeordnet.

Wie in Figur 2 zu sehen, besteht die Schrägkulisse 12 aus zwei parallel und geradlinig zueinander angeordneten Arbeitsflächen 12a,12b . Durch die Betätigung des Antriebsmotors 8 kommt es zø einer Drehbewegung des Stirnrades 9 und dadurch zu einer horizontalen gerichteten Bewegung der Zahnstange 10 und des mit ihr verbundenen Kuppelelementes 11. Befindet sich das Gehäuse 2 in einer der Figur 2 entsprechenden ersten Position, so kommt es bei einer Rechtsdrehung des Stirnrades 9 zu einer nach rechts gerichteten Bewegung der Kippvorrichtung 7, so daß die erste Arbeitsfläche 12a der Schrägkulisse 12 gegen die als Festpunkt wirkende Zunge 13 des Schaltelementes 3 gedrückt wird. Dadurch wird das Gehäuse 2 gegen die Federkraft der Feder 6, quer zur Bewegungsrichtung der Kippvorrichtung 7, aus der bisher innegehabten Position in die Richtung der zweiten einzunehmenden Position bewegt bzw. um die horizontale Achse der Pfannenlager 5 gekippt. Bei diesen Bewegungsvorgang überwindet das Gehäuse 2 mit Hilfe des Antriebsmotors 8 und der Kippvorrichtung 7 den Todpunkt T bzw. den Kipp-Punkt der Formfeder 6, um dann nach Überwinden dieses Punktes, durch die Federkraft der Formfeder 6 in die zweite Position , gegen das Schaltelement 3 gedrückt und dort fixiert zu werden. Dabei sind die Arbeitsflächen 12a,12b in

-5-

einem Abstand zueinander angeordnet, so daß es zu einer vollen Kippbewegung des Gehäuses 2 kommen kann und die Kippbewegung durch die mit
dem Schaltelement 3 in Eingriff gelangenden Anschläge begrenzt wird.
Durch diese Kippbewegung wird mittels eines im Gehäuse 2 angeordneten
Schalters (nicht dargestellt) der Antriebsmotor aus- und umgeschaltet, so daß der Antriebsmotor 8 sich bei einer erneuten Inbetriebnahme in entgegengesetzter Richtung dreht. Die Umschaltzeit liegt hierbei
im Bereich von etwa 0,5 sec. Die Arbeitsflächen 12a, 12b der
Schrägkulisse 12 sind länger als der Arbeitsbereich d.h. länger als
der Berührungsbereich, den die Zunge 13 mit jeweils einer der
Arbeitsflächen 12a, 12b aufweist, so daß nach dem Abschalten des
Antriebsmotors 8, dieser und somit auch das Getriebe 9a auslaufen kann,
ohne daß die Gefahr besteht, daß die Zunge 13 und die Schrägkulisse 12
außer Eingriff geraten oder aber daß die Auslaufbewegung durch eine
Berührung der Zunge 13 mit einer der Arbeitsflächen 12a, 12b gebremst
würde.

Soll das Gehäuse bzw. der Keilspiegel wieder in die vorherige Position
überführt werden, wird der Antriebsmotor erneut eingeschaltet. Da
der Antriebsmotor sich nun in entgegengesetzter Richtung dreht, wird
ein umgekehrt verlaufender Kippvorgang des Gehäuses ermöglicht, wobei
dann die zweite Arbeitsfläche 12b der Schrägkulisse 12 in Eingriff
mit der Zunge 13 kommt.

EK-su

G55679

Metallwerk Frese GmbH , Moltkestraße 25, 5653 Leichlingen

_____

Patentansprüche:

1. Motorisch gesteuerter Kippspiegel, mit einem zur Aufnahme einer Spiegelscheibe geeigneten, um eine horizontale Achse kippbar gelagerten Gehäuse, mit einem zur verschwenkbaren Befestigung des Kippspiegels und zur kippbaren Lagerung des Gehäuses geeigneten Schaltelement und mit einem der Positionsänderung der Spiegelscheibe dienenden Antrieb, d a d u r c h   g e k e n n z e i c h n e t, daß in dem Gehäuse (2) eine mit dem Schaltelement (3) in Eingriff stehende Feder (6) angeordnet ist, daß das Schaltelement (3) eine Zunge (13 aufweist und daß diese mit ihrem freien Ende mit einer in dem Gehäuse (2) horizontal verschiebbar angeordneten, zwei Arbeitsflächen (12a,12b) aufweisenden Schrägkulisse (12) eines Kuppelelements (11) mit Spiel in Eingriff steht, daß die länger als der Arbeitsbereich ausgebildeten Arbeitsflächen (12a,12b) der Schrägkulisse (12) parallel, geradlinig und in einem eine volle Kippbewegung des Gehäuses (2) zulassenden Abstand zueinander angeordnet sind und daß das die Schrägkulisse (12) aufweisende Kuppelelement (11) über ein ebenfalls im Gehäuse (2) angeordnetes Getriebe (9a) mit dem im Gehäuse (2) angeordneten Antriebsmotor (8) verbunden ist.

2. Kippspiegel nach Anspruch 1, dadurch gekennzeichnet, daß das Getriebe (9a) eine mit dem Kuppelelement (11) fest verbundene Zahnstange (10) aufweist und daß auf der Welle des Antriebsmotors (8) ein mit der Zahnstange (10) kämmendes Stirnrad (9) angeordnet ist.

3. Kippspiegel nach Anspruch 1, dadurch gekennzeichnet, daß das Getriebe (9a) als Schneckentrieb ausgebildet ist.

-2-

4. Kippspiegel nach einem der Ansprüche 1 bis 3, dadurch gekennzeichnet, daß der Antriebsmotor (8) ein Gleichstrommotor mit zwei Drehrichtungen ist.

5. Kippspiegel nach einem der Ansprüche 1 bis 4, dadurch gekennzeichnet, daß in dem Gehäuse (2) ein zum Aus- und Umschalten des Antriebsmotors (8) geeigneter Schalter angeordnet ist.

EK/su

FIG.1

FIG.2

0228580